# EUROPÄISCHE PATENTSCHRIFT

(11) **EP 2 185 833 B1**
(45) Veröffentlichungstag und Bekanntmachung des Hinweises auf die Patenterteilung: **04.01.2012**
(21) Anmeldenummer: 08758917.2
(22) Anmeldetag: 31.05.2008
(51) Int. Cl.: F16D 13/64, F16D 13/72

(54) **REIBTEIL MIT EINER ZICKZACK- ODER WELLENFÖRMIG UMLAUFENDEN NUT IN DER REIBFLÄCHE**
FRICTIONAL PART WITH A ZIG-ZAG OR UNDULATING CIRCUMFERENTIAL GROOVE IN THE FRICTIONAL SURFACE
PIÈCE DE FRICTION COMPRENANT UNE RAINURE PÉRIPHÉRIQUE EN ZIGZAG OU ONDULÉE PRATIQUÉE DANS LA SURFACE DE FRICTION

(30) Priorität: 15.08.2007 DE 102007038682
(43) Veröffentlichungstag der Anmeldung: 19.05.2010
(73) Patentinhaber: BorgWarner Inc., Auburn Hills, MI 48326 (US)
(72) Erfinder: FABRICIUS, Emilio, 68723 Oftersheim (DE); REINERS, Volker, 68766 Hockenheim (DE)
(74) Vertreter: Leckel, Ulf
(86) Internationale Anmeldenummer: PCT/EP2008/004347
(87) Internationale Veröffentlichungsnummer: WO 2009/021569

(56) Entgegenhaltungen:
- EP-A- 1 473 478
- US-A- 3 972 400
- US-A- 5 176 236
- US-A- 5 979 621

## Beschreibung

Die vorliegende Erfindung betrifft ein Reibteil, wie beispielsweise eine Reiblamelle, für eine reibschlüssig arbeitende Einrichtung, wie beispielsweise eine Lamellenkupplung, mit einer ringförmigen Reibfläche, die einen Innenrand und einen Außenrand aufweist, wobei in der Reibfläche eine umlaufende erste Nut vorgesehen ist, die sich zickzack- oder wellenförmig zwischen radial innenliegenden und radial außenliegenden Umlenkpunkten erstreckt. Ein solches Reibteil ist aus US-A-5,979,621 bekannt.

Aus dem Stand der Technik sind Reibteile für reibschlüssig arbeitende Einrichtungen, insbesondere Lamellen für Lamellenkupplungen, bekannt, die sich im Wesentlichen aus einem ringförmigen Reibbelagträger und einem Reibbelag zusammensetzen, der auf mindestens einer Seite des Reibbelagträgers aufgebracht ist, um eine ringförmige Reibfläche auszubilden. Der Reibbelag besteht in der Regel aus einer Faserstoffmasse, die aus einem papierhaltigen Material hergestellt ist, oder auch aus Karbon. Der Reibbelagträger wird hingegen meist von einem Blechteil gebildet. Um die beim Schaltvorgang und insbesondere im Dauerschlupfbetrieb einer Lamellenkupplung oder Lamellenbremse mit einem solchen Reibteil entstehenden hohen Temperaturen, die aufgrund des Reibflächenkontakts entstehen, zu verringern bzw. die entsprechend große Wärme abführen zu können, werden die bekannten Reibteile üblicherweise mit einem geeigneten Kühl- und Schmiermittel, bei dem es sich vorzugsweise um Öl handelt, angeströmt. Um das Kühl- und Schmiermittel sinnvoll zu- und abführen zu können, sind in der Reibfläche des Reibbelages regelmäßig Nuten ausgebildet, die 1 entweder in den Reibbelag eingeprägt oder zwischen einzelnen Reibbelagsegmenten des Reibbelages angeordnet.

So sind beispielsweise Reibteile mit einer ringförmigen Reibfläche bekannt, die einen Innenrand und einen Außenrand aufweist, wobei in der Reibfläche eine umlaufende erste Nut vorgesehen ist, die sich zickzack- oder wellenförmig zwischen radial innenliegenden und radial außenliegenden Umlenkpunkten erstreckt. Die bekannten Reibteile mit einer solchen umlaufenden Nut weisen jedoch einige Nachteile auf. So hat sich insbesondere gezeigt, dass diejenigen Bestandteile des Reibbelages, die radial außerhalb der umlaufenden Nut angeordnet sind, einem besonders starken Verschleiß unterworfen sind, der auf die größere Umfangsgeschwindigkeit und die damit einhergehende höhere Temperatur in diesem Bereich zurückzuführen ist. So neigen die radial außerhalb der umlaufenden Nut angeordneten Abschnitte des Reibbelages dazu, regelrecht zu verbrennen, wenn die reibschlüssig arbeitende Einrichtung mit besonders hohen Drehzahlen betrieben wird. Darüber hinaus hat sich bei der Verwendung der bekannten Reibteile gezeigt, dass die Regelbarkeit der reibschlüssig arbeitenden Einrichtung eingeschränkt ist. Des Weiteren erzeugen die bekannten Nutmuster ein großes Schleppmoment, so dass selbst dann eine ungewünschte Drehmomentübertragung stattfinden kann, wenn die Reibteile der reibschlüssig arbeitenden Einrichtung nicht im Reibeingriff miteinander stehen.

Es ist daher eine Aufgabe der vorliegenden Erfindung, ein Reibteil für eine reibschlüssig arbeitende Einrichtung mit einem Nutmuster in der Reibfläche zu schaffen, durch das der Verschleiß der Reibfläche bzw. des Reibbelages reduziert, das Schleppmoment verringert und die Regelbarkeit einer reibschlüssig arbeitenden Einrichtung mit einem solchen Reibteil verbessert ist.

Diese Aufgabe wird durch die in Patentanspruch 1 angegebenen Merkmale gelöst. Vorteilhafte Ausführungsformen der Erfindung sind Gegenstand der Unteransprüche.

Das erfindungsgemäße Reibteil ist für eine reibschlüssig arbeitende Einrichtung konzipiert. So kann es sich bei dem Reibteil beispielsweise um eine Reiblamelle für eine Lamellenkupplung oder Lamellenbremse handeln. Das Reibteil weist eine ringförmige Reibfläche auf. Die ringförmige Reibfläche kann beispielsweise von dem Reibteil selbst oder einem auf dem Reibteil aufgebrachten Reibbelag gebildet werden. Die ringförmige ausgebildete Reibfläche weist einen Innenrand, also einen radial nach innen weisenden Rand, und einen Außenrand auf, also einen radial nach außen weisenden Rand, wobei in der Reibfläche eine umlaufende erste Nut vorgesehen ist, die beispielsweise der Zu- und Abfuhr eines Kühl- und Schmiermittels dienen kann. Unter einer umlaufenden Nut kann hierbei insbesondere eine in Umfangsrichtung durchgehende, vorzugsweise in Umfangsrichtung geschlossene, besonders bevorzugt eine ringförmig ausgebildete Nut verstanden werden. Die umlaufende erste Nut erstreckt sich zickzack- oder wellenförmig zwischen radial innenliegenden und radial außenliegenden Umlenkpunkten in der ringförmigen Reibfläche. Um eine Zufuhr oder Abfuhr des Kühl- und Schmiermittels in die umlaufende erste Nut zu ermöglichen, sind mehrere zweite Nuten in der Reibfläche vorgesehen, die sich ausgehend von dem Innenrand der Reibfläche zu den außenliegenden Umlenkpunkten erstrecken. So kann beispielsweise eine radial nach außen gerichtete Kühl- und Schmiermittelzufuhr über diese zweiten Nuten in die umlaufende erste Nut erfolgen. Im umgekehrten Fall kann die Kühl- und Schmiermittelabfuhr aus der umlaufenden ersten Nut bei radial nach innen gerichteter Kühl- und Schmiermittelzufuhr über diese zweiten Nuten erfolgen. Darüber hinaus sind mehrere dritte Nuten in der Reibfläche vorgesehen, die sich ausgehend von dem Außenrand in die umlaufende erste Nut erstrecken, wobei die dritten Nuten zwischen den Umlenkpunkten an Einmündungspunkten in die umlaufende erste Nut münden. Somit können die dritten Nuten bei einer radial nach außen gerichteten Kühl- und Schmiermittelzufuhr der Abfuhr des Kühl- und Schmiermittels aus der umlaufenden ersten Nut dienen. Bei einer radial nach innen gerichteten Kühl- und Schmiermittelzufuhr können die dritten Nuten hingegen der Zufuhr des Kühlmittels in die umlaufende erste Nut dienen.

Indem sich die zweiten Nuten zu den außenliegenden Umlenkpunkten erstrecken, während die dritten Nuten zwischen den Umlenkpunkten in die umlaufende erste Nut münden, ist ein Reibteil geschaffen, dessen Verwendung in einer reibschlüssig arbeitenden Einrichtung überraschenderweise zu einer besonders guten Regelbarkeit dieser reibschlüssig arbeitenden Einrichtung führt. Darüber hinaus hat sich das temperaturbedingte Verschleißverhalten derjenigen Bereiche der Reibfläche wesentlich verbessert, die in radialer Richtung außerhalb der umlaufenden ersten Nut angeordnet sind. So weisen die radial außerhalb der umlaufenden ersten Nut angeordneten Bereiche der Reibfläche einen geringeren temperaturbedingten Verschleiß auf, als dies bei herkömmlichen Reibteilen mit einer umlaufenden Nut in der Reibfläche der Fall ist. Somit bewirkt das erfindungsgemäße Nutmuster eine gleichermaßen gute Kühlung der bezogen auf die umlaufende erste Nut radial außenliegenden und radial innenliegenden Bereiche der ringförmigen Reibfläche. Darüber hinaus bewirkt eine radial nach außen gerichtete Kühl- und Schmiermittelzufuhr über die zweiten Nuten in die umlaufende erste Nut, dass an den außenliegenden Umlenkpunkten eine Staudruck entsteht, der zu einer Reduzierung des Schleppmomentes führt.

In einer vorteilhaften Ausführungsform des erfindungsgemäßen Reibteils umfasst die umlaufende erste Nut mehrere erste Nutabschnitte, die sich in die eine Umfangsrichtung von den außenliegenden Umlenkpunkten zu den innenliegenden Umlenkpunkten erstrecken, und mehrere zweite Nutabschnitte, die sich in dieselbe Umfangsrichtung von den innenliegenden Umlenkpunkten zu den außenliegenden Umlenkpunkten erstrecken. Unter den Umlenkpunkten sind vorstehend wie nachstehend diejenigen Punkte in der umlaufenden ersten Nut zu verstehen, an denen sich die radiale Strömungsrichtung des Kühl- und Schmiermittels innerhalb der umlaufenden ersten Nut ändert.

Grundsätzlich kann die umlaufende erste Nut wellenförmig ausgebildet sein, so dass die ersten und zweiten Nutabschnitte gekrümmt bzw. bogenförmig ausgebildet sind. In einer weiteren vorteilhaften Ausführungsform des erfindungsgemäßen Reibteils hat sich jedoch gezeigt, dass eine besonders gute Kühlung und eine nachhaltig verbesserte Regelbarkeit der reibschlüssig arbeitenden Einrichtung mit einem solchen Reibteil erzielt werden kann, wenn die ersten und zweiten Nutabschnitte der umlaufenden ersten Nut geradlinig ausgebildet sind. Die somit geschaffene zickzackförmig umlaufende erste Nut verbessert somit sowohl die Kühlung als auch die Regelbarkeit. Darüber hinaus kann hierdurch eine weitere Verringerung des Schleppmomentes erreicht werden, zumal der Staudruck bei einer radial nach außen gerichteten Kühl- und Schmiermittelzufuhr an den außenliegenden Umlenkpunkten vergrößert ist.

Um eine besonders effektive Kühlung derjenigen Bereiche der ringförmigen Reibfläche zu erzielen, die in radialer Richtung außerhalb der umlaufenden ersten Nut angeordnet sind, sind in einer besonders vorteilhaften Ausführungsform des erfindungsgemäßen Reibteils sowohl dritte Nuten, die in die ersten Nutabschnitte der umlaufenden ersten Nut münden, als auch dritte Nuten vorgesehen, die in die zweiten Nutabschnitte der umlaufenden ersten Nut münden.

Um insbesondere bei einer radial nach außen gerichteten Kühl- und Schmiermittelzufuhr eine effektive Kühlung derjenigen Bereiche der ringförmigen Reibfläche zu erzielen, die in radialer Richtung außerhalb der umlaufenden ersten Nut vorgesehen sind, sind in einer bevorzugten Ausführungsform des erfindungsgemäßen Reibteils ferner vierte Nuten in der Reibfläche vorgesehen, die sich ausgehend von dem Innenrand zu den innenliegenden Umlenkpunkten erstrecken. Darüber hinaus wird dank der vierten Nuten eine Vollfüllung der umlaufenden ersten Nut bewirkt, die nicht nur auf die Kühlung, sondern auch auf das Schleppmoment einen positiven Einfluss hat. Darüber hinaus hat sich gezeigt, dass die Regelbarkeit einer reibschlüssig arbeitenden Einrichtung mit einem solchen Reibteil verbessert ist.

In einer besonders bevorzugten Ausführungsform des erfindungsgemäßen Reibteils sind ferner erste Sacknuten in der Reibfläche vorgesehen, die sich ausgehend von den innenliegenden Umlenkpunkten radial nach innen erstrecken. Die ersten Sacknuten haben dabei einen überraschend positiven Einfluss auf das temperaturbedingte Verschleißverhalten derjenigen Bereiche der Reibfläche, die in radialer Richtung außerhalb der umlaufenden ersten Nut angeordnet sind. So konnte festgestellt werden, dass insbesondere diejenigen Bereiche oder Reibbelagsegmente, die radial außerhalb der umlaufenden ersten Nut angeordnet und den innenliegenden Umlenkpunkten zugeordnet bzw. benachbart sind, besonders effektiv gekühlt werden, so dass diese lediglich einen geringen temperaturbedingten Verschleiß aufweisen. Auf diese Weise kann die Lebensdauer des Reibbelags bzw. der Reibfläche nachhaltig verlängert werden.

Um eine besonders effektive Kühlung und Schmierung der gesamten Reibfläche des Reibteils zu erreichen, ist in einer besonders bevorzugten Ausführungsform des erfindungsgemäßen Reibteils den in Umfangsrichtung aufeinander folgenden innenliegenden Umlenkpunkten abwechselnd jeweils eine erste Sacknut oder eine vierte Nut zugeordnet. Hierunter ist zu verstehen, dass an einem innenliegenden Punkt eine erste Sacknut vorgesehen ist, an dem in Umfangsrichtung folgenden innenliegenden Umlenkpunkt eine vierte Nut, an dem darauf folgenden innenliegenden Umlenkpunkt wieder eine erste Sacknut usw. vorgesehen ist.

Als eine besonders gut regelbare reibschlüssig arbeitende Einrichtung hat sich eine reibschlüssige Einrichtung erwiesen, die eine weitere bevorzugte Ausführungsform des erfindungsgemäßen Reibteils aufweist, bei dem die in einem außenliegenden Umlenkpunkt zusammengeführten ersten und zweiten Nutabschnitte der umlaufenden ersten Nut einen inneren Winkel einschließen, der größer als 130° ist. Hierbei ist die eine Größe des inneren Winkels zwischen 140° und 145° bevorzugt.

Gemäß einer weiteren vorteilhaften Ausführungsform des erfindungsgemäßen Reibteils ist der Nutquerschnitt der umlaufenden ersten Nut an den Umlenkpunkten genauso groß wie die Nutquerschnitte der ersten und zweiten Nutabschnitte der umlaufenden ersten Nut. Auf diese Weise kann an den Umlenkpunkten, insbesondere an den innenliegenden Umlenkpunkten, zwar ein Staudruck erzeugt werden, der einem Schleppmoment entgegenwirkt, jedoch muss es hier nicht zu einer dauerhaften Ansammlung eines Kühl- und Schmiermittelreservoirs kommen.

In einer weiteren bevorzugten Ausführungsform des erfindungsgemäßen Reibteils ist der kleinste Nutquerschnitt der zweiten und/oder vierten Nut größer oder als kleiner, vorzugsweise größer, als der kleinste Nutquerschnitt der dritten Nut. Der Nutquerschnitt bezeichnet hierbei die Querschnittsfläche der jeweiligen Nut, wobei der Nutquerschnitt in einer Ebene quer zur Erstreckungsrichtung der jeweiligen Nut verläuft. So sollte der kleinste Nutquerschnitt der zweiten und/oder vierten Nut bei einer radial nach außen gerichteten Kühl- und Schmiermittelzufuhr über die zweite und/oder vierte Nut größer als der kleinste Nutquerschnitt der dritten Nut sein, um im Bereich der Umlenkpunkte, insbesondere im Bereich des außenliegenden Umlenkpunktes einen Staudruck zu erzielen, der dem Schleppmoment entgegenwirkt. Bei einer radial nach innen gerichteten Kühl- und Schmiermittelzufuhr sollte die Dimensionierung der zweiten und/oder vierten Nut bzw. der dritten Nut umgekehrt gewählt werden.

Gemäß einer weiteren bevorzugten Ausführungsform des erfindungsgemäßen Reibteils ist der kleinste Nutquerschnitt der zweiten und/oder vierten Nut größer als der größte Nutquerschnitt der dritten Nut ausgebildet. Hierdurch wird eine besonders effektive Temperaturverringerung im Bereich der umlaufenden ersten Nut und somit auch in dem Bereich der Reibfläche erzielt, der in radialer Richtung außerhalb der umlaufenden ersten Nut vorgesehen ist, zumal aufgrund einer langsameren Strömung des Kühl- und Schmiermittels innerhalb der umlaufenden ersten Nut eine verbesserte Wärmeaufnahme erzielt werden kann.

Um eine weitgehend drehrichtungsunabhängige Zu- und Abfuhr des Kühl- und Schmiermittels in bzw. aus der umlaufenden ersten Nut zu ermöglichen, erstrecken sich in einer weiteren bevorzugten Ausführungsform des erfindungsgemäßen Reibteils die zweiten Nuten, die dritten Nuten, die vierten Nuten und/oder die Sacknuten entlang einer Radialen des Reibteils. Dabei erstrecken sich die genannten Nuten vorzugsweise geradlinig entlang der Radialen, so dass das Reibteil drehrichtungsunabhängig in die reibschlüssig arbeitende Einrichtung eingebaut werden kann und eine Fehlmontage ausgeschlossen ist.

In einer weiteren vorteilhaften Ausführungsform des erfindungsgemäßen Reibteils weist das Reibteil einen Reibbelagträger auf, der beispielsweise von einer Ringscheibe aus Blech bzw. Stahl gebildet sein, wobei die Reibfläche von einem auf dem Reibbelagträger aufgebrachten Reibbelag gebildet ist. So kann es sich bei dem Reibbelag beispielsweise um einen auf den Reibbelagträger aufgeklebten Reibbelag handeln. Der Reibbelag ist jedoch nicht einstückig ausgebildet, sondern setzt sich vielmehr aus mehreren voneinander beabstandeten Reibbelagsegmenten zusammen, zwischen denen die umlaufende erste Nut, die zweiten Nuten und die dritten Nuten sowie gegebenenfalls auch die vierten Nuten ausgebildet sind. Im Gegensatz zu einem einstückig ausgebildeten Reibbelag, in den die vorgenannten Nuten eingeprägt sind, hat der hier verwendete segmentierte Reibbelag den Vorteil, dass die Herstellung des Reibbelages weniger Material verbraucht, was insbesondere bei teuren Papierreibbelägen zu hohen Kostenersparnissen führt. So wird lediglich dort Reibbelagmaterial verwendet, wo tatsächlich die Reibfläche ausgebildet sein soll, wohingegen im Bereich der Nuten, deren Grund nunmehr von dem Reibbelagträger gebildet ist, auf Reibbelagmaterial verzichtet wird. Auch kann der segmentierte Reibbelag eine geringere Dicke aufweisen, als dies bei einem einstückigen Reibbelag mit eingeprägten Nuten der Fall ist. Während ein Einprägen der Nuten ferner zu einer erhöhten Dicke des Reibbelages im Randbereich der Nuten führen kann, ist dies bei einem segmentierten Reibbelag weitgehend ausgeschlossen, so dass ein Reibteil mit den beschriebenen Reibbelagsegmenten zu einer besseren Regelbarkeit der reibschlüssig arbeitenden Einrichtung mit einem solchen Reibteil führt.

An den Aus- oder Eintrittsöffnungen am Außenrand der Reibfläche und den Ein- bzw. Austrittsöffnungen am Innenrand der Reibfläche kommt es bei den aus dem Stand der Technik bekannten Reibteilen häufig zu einer Beschädigung der angrenzenden Reibbelagsegmente. Um dies zu verhindern, weist der Reibbelag in einer besonders bevorzugten Ausführungsform des erfindungsgemäßen Reibteils bezogen auf die umlaufende erste Nut radial außenliegende Reibbelagsegmente, also Reibbelagsegmente, die in radialer Richtung außerhalb der umlaufenden ersten Nut angeordnet sind, und radial innenliegende Reibbelagsegmente auf, die demzufolge in radialer Richtung innerhalb der umlaufenden ersten Nut angeordnet sind, wobei die den dritten Nuten zugewandten Kanten der außenliegenden Reibbelagsegmente sowie die den zweiten und/oder vierten Nuten zugewandten Kanten der innenliegenden Reibbelagsegmente eine Kantenlänge von mindestens 2 mm, vorzugsweise mehr als 3 mm aufweisen. So ist bei einer Kantenlänge von mindestens 2 mm sichergestellt, dass beim Ausstanzen der Reibbelagsegmente eine wohldefinierte Kante erzeugt werden kann, die der entsprechenden Nut zugewandt ist. Auch ist während des Betriebes sichergestellt, dass das auf dem Reibbelagträger aufgebrachte Reibbelagsegment im Bereich dieser Kante haften bleibt, ohne einzureißen oder gar abzureißen. In diesem Zusammenhang haben sich insbesondere Kanten mit einer Kantenlänge als erfolgreich erwiesen, die größer als 3 mm sind. Darüber hinaus bewirkt die Beabstandung der umlaufenden ersten Nut von dem Innen- und Außenrand der Reibfläche eine besonders effektive Kühlung des Reibteils bzw. der Reibfläche.

Um die außenliegenden Reibbelagsegmente noch stärker vor einem temperaturbedingten Verschleiß zu bewahren, bilden die außenliegenden Reibbelagsegmente in einer weiteren besonders bevorzugten Ausführungsform des erfindungsgemäßen Reibteils jeweils eine Teilreibfläche der Reibfläche aus, die kleiner als 60 mm², vorzugsweise kleiner als 50 mm² ist. So sollten insbesondere die Umlenkpunkte und Einmündungspunkte derart in der Reibfläche angeordnet sein, dass sich für die Teilreibflächen der außenliegenden Reibbelagsegmente automatisch eine Größe ergibt, die kleiner als 60 mm² ist. Ein besonders gutes temperaturbedingtes Verschleißverhalten hat sich hierbei bei außenliegenden Reibbelagsegmenten ergeben, deren Teilreibfläche kleiner als 50 mm² ist. Um auch bei den innenliegenden Reibbelagsegmenten die vorstehend genannten Vorteile zu erzielen, bilden vorzugsweise auch die innenliegenden Reibbelagsegmente jeweils eine Teilreibfläche der Reibfläche aus, die kleiner als 60 mm², besonders bevorzugt kleiner als 50 mm² ist.

Um eine größere Flexibilität bei der Anordnung der Umlenkpunkte sowie der Einmündungspunkte zueinander zu haben, sind in einer weiteren bevorzugten Ausführungsform des erfindungsgemäßen Reibteils ferner zweite Sacknuten vorgesehen, die sich ausgehend von dem Außenrand radial nach innen erstrecken. Dank der zweiten Sacknuten ist die von dem außenliegenden Reibbelagsegment gebildete Teilreibfläche weiter oder auf das zuvor erwähnte vorteilhafte Maß reduziert. Somit kann das temperaturbedingte Verschleißverhalten der außenliegenden Reibbelagsegmente mit Hilfe der zweiten Sacknuten weiter verbessert werden. Ferner kann bei einer radial nach außen gerichteten Kühl- und Schmiermittelzufuhr im Bereich der an dem Außenrand vorgesehenen zweiten Sacknut ein Unterdruck entstehen, während an den Austrittsöffnungen der dritten Nuten ein Überdruck besteht. Auf diese Weise wird das Kühl- und Schmiermittel aus dem Bereich der Austrittsöffnungen der dritten Nut in den Bereich der zweiten Sacknut gesogen, wodurch eine besonders gute Kühlwirkung insbesondere der außenliegenden Reibbelagsegmente erzielt wird.

Aufgrund der zickzack- oder wellenförmigen Ausbildung der umlaufenden ersten Nut, weisen diejenigen au-βenliegenden Reibbelagsegmente, die den innenliegenden Umlenkpunkten zugeordnet bzw. an die innenliegenden Umlenkpunkte angrenzen, eine größere Teilreibfläche als die den außenliegenden Umlenkpunkten zugeordneten außenliegenden Reibbelagsegmente auf. Um dennoch durchgehend au-βenliegende Reibbelagsegmente mit Teilreibflächen in der bevorzugten Größe zu erhalten, sind die zweiten Sacknuten in einer weiteren bevorzugten Ausführungsform des erfindungsgemäßen Reibteils in den den innenliegenden Umlenkpunkten zugeordneten außenliegenden Reibbelagsegmenten, besonders bevorzugt in allen den innenliegenden Umlenkpunkten zugeordneten außenliegenden Reibbelagsegmenten vorgesehen.

Um einerseits eine gute Kühlung des Reibteils im Bereich der ersten und/oder zweiten Sacknuten zu erreichen und andererseits einen regelmäßigen Austausch des Kühl- und Schmiermittels innerhalb der ersten und/oder zweiten Sacknuten zu ermöglichen, sind die ersten und/oder zweiten Sacknuten in einer weiteren vorteilhaften Ausführungsform des erfindungsgemäßen Reibteils in radialer Richtung nach innen verjüngt.

Bezug nehmend auf die vorangehend beschriebene Ausführungsform des erfindungsgemäßen Reibteils hat sich eine weitere bevorzugte Ausführungsform des erfindungsgemäßen Reibteils als vorteilhaft erwiesen, bei der die Ränder der ersten und/oder zweiten Sacknuten einen Winkel zwischen 20° und 25° einschließen. Der vorgenannte Vorteil war hierbei bei Ausführungsformen besonders ausgeprägt, bei denen die Ränder der ersten und/oder zweiten Sacknuten einen Winkel zwischen 22° und 23° einschließen.

In einer weiteren vorteilhaften Ausführungsform des erfindungsgemäßen Reibteils sind die innenliegenden Umlenkpunkte auf einem inneren Kreis mit einem ersten Radius und die außenliegenden Umlenkpunkte auf einem äußeren Kreis mit einem zweiten Radius angeordnet, wobei die Kreise konzentrisch zueinander angeordnet sind und der erste Radius kleiner als der zweite Radius ist.

In einer weiteren bevorzugten Ausführungsform des erfindungsgemäßen Reibteils sind die Einmündungspunkte auf einem zwischenliegenden Kreis mit einem dritten Radius angeordnet, wobei der zwischenliegende Kreis konzentrisch zu dem inneren und äußeren Kreis angeordnet ist und der dritte Radius größer als der erste Radius und kleiner als der zweite Radius ist. Bei dem zwischenliegenden Kreis handelt es sich vorzugsweise um einen mittleren Kreis, d. h. die Differenz zwischen dem dritten Radius und dem ersten Radius entspricht der Differenz zwischen dem zweiten Radius und dem dritten Radius. Bei dieser Anordnung der Umlenk- und Einmündungspunkte ergibt sich eine besonders gute Regelbarkeit der reibschlüssig arbeitenden Einrichtung mit einem solchen Reibteil.

In einer weiteren vorteilhaften Ausführungsform des erfindungsgemäßen Reibteils erstreckt sich der Innenrand der Reibfläche entlang eines inneren Umfangskreises mit einem ersten Umfangskreisradius und der Außenrand der Reibfläche entlang eines äußeren Umfangskreises mit einem zweiten Umfangskreisradius, wobei die Umfangskreise konzentrisch zueinander, vorzugsweise auch konzentrisch zu dem inneren und äußeren Kreis angeordnet sind. Auf diese Weise können die sich vom Innenrand bis zum außenliegenden Umlenkpunkt erstreckenden zweiten Nuten jeweils dieselbe Länge aufweisen, während auch die gegebenenfalls vorhandenen vierten Nuten, die sich vom Innenrand bis zu den innenliegenden Umlenkpunkten erstrecken, dieselbe Länge aufweisen. Hierdurch ist eine gleichmäßige Versorgung der umlaufenden ersten Nut mit Kühl- und Schmiermittel sichergestellt.

Wie bereits zuvor unter Bezugnahme auf eine andere Ausführungsform erläutert, sollten die zweiten, dritten und vierten Nuten eine vorbestimmte Länge nicht unterschreiten, um zu verhindern, dass die Kanten der angrenzenden Reibbelagsegmente während des Betriebes oder bereits während des Ausstanzens und Aufbringens der Reibbelagsegmente beschädigt werden. Dies kann durch eine weitere bevorzugte Ausführungsform des erfindungsgemäßen Reibteils verhindert werden, bei der die Differenz zwischen dem ersten Radius und dem ersten Umfangskreisradius und/oder die Differenz zwischen dem zweiten Radius und dem zweiten Umfangskreisradius vorzugsweise mindestens 3 mm, besonders bevorzugt mehr als 4 mm beträgt.

Als besonders gut kühlbares Reibteil mit verbessertem Verschleißverhalten der Reibfläche hat sich ferner eine weitere vorteilhafte Ausführungsform des erfindungsgemäßen Reibteils erwiesen, bei der das Verhältnis zwischen der Differenz aus dem ersten und zweiten Umfangskreisradius und der Differenz aus dem ersten und zweiten Radius größer als 3 zu 2, vorzugsweise größer als 3 zu 1 ist.

Gemäß einer weiteren bevorzugten Ausführungsform des erfindungsgemäßen Reibteils enden die dritten Nuten an den Einmündungspunkten. So können zwar weitere Nuten in der Reibfläche vorgesehen sein, die nicht einer der zuvor genannten Nuten entsprechen, jedoch sollten diese weiteren Nuten nicht im Bereich des Einmündungspunktes in die umlaufende erste Nut münden. Auch sollte die dritte Nut die umlaufende erste Nut nicht in dem Einmündungspunkt kreuzen. In entsprechender Weise ist es bevorzugt, wenn die zweiten Nuten an den außenliegenden Umlenkpunkten enden. Des Weiteren enden die vierten Nuten vorzugsweise an den innenliegenden Umlenkpunkten. Bei diesen Ausführungsformen wird das günstige Strömungsverhalten des Kühl- und Schmiermittels innerhalb der umlaufenden ersten Nut nicht von weiteren Nuten negativ beeinflusst.

Wie bereits zuvor erwähnt, können noch weitere Nuten, bei denen es sich nicht um eine der zuvor beschriebenen Nuten oder Sacknuten handelt, in der Reibfläche des Reibteils vorgesehen sein. Um jedoch das vorteilhafte Reib-, Verschleiß- und Regelverhalten des erfindungsgemäßen Reibteils zu erhalten, ist das Nutmuster in der Reibfläche in einer weiteren besonders bevorzugten Ausführungsform des erfindungsgemäßen Reibteils zu mehr als 80 %, vorzugsweise zu mehr als 90 %, besonders bevorzugt vollständig von der umlaufenden ersten Nut, den zweiten Nuten und den dritten Nuten sowie gegebenenfalls den vierten Nuten, den ersten Sacknuten und/oder den zweiten Sacknuten gebildet. Hierbei entsprechen 100 % des Nutmusters der Gesamtfläche von allen Nuten des Nutmusters, wenn das Nutmuster in axialer Richtung betrachtet wird. Alternativ können sich 100 % des Nutmusters auch auf das Gesamtvolumen aller Nuten des Nutmusters beziehen.

Die Erfindung wird im Folgenden anhand beispielhafter Ausführungsformen unter Bezugnahme auf die beigefügten Zeichnungen näher erläutert. Es zeigen:
- Fig. 1: eine Vorderansicht einer ersten Ausführungsform des erfindungsgemäßen Reibteils,
- Fig. 2: eine vergrößerte Darstellung des Ausschnitts A von Fig. 1,
- Fig. 3: eine Vorderansicht einer zweiten Ausführungsform des erfindungsgemäßen Reibteils und
- Fig. 4: eine vergrößerte Darstellung des Ausschnitts B von Fig. 3.

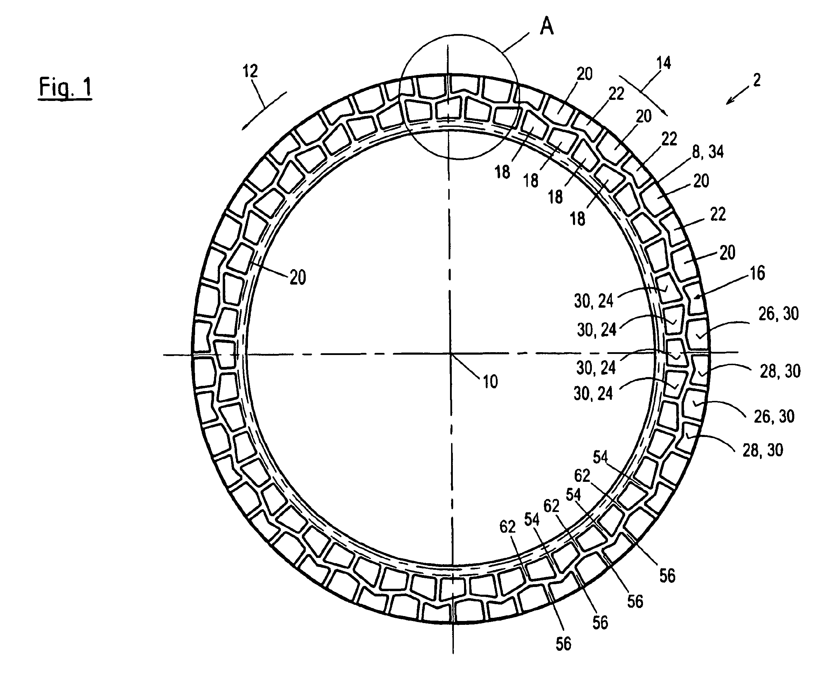

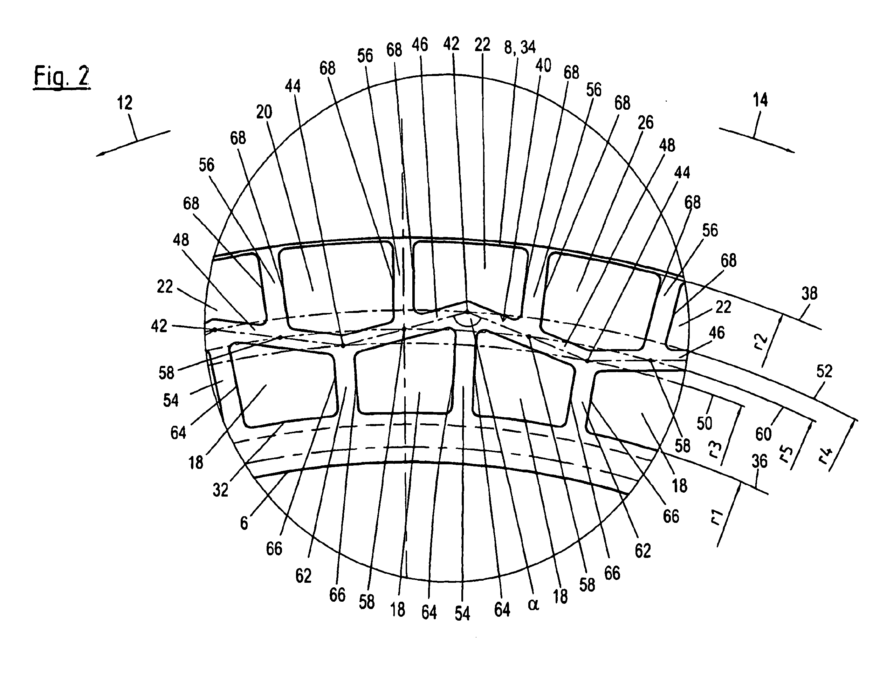

Die Fig. 1 und 2 zeigen eine erste Ausführungsform des erfindungsgemäßen Reibteils 2 für eine reibschlüssig arbeitende Einrichtung. Das gezeigte Reibteil 2 ist im vorliegenden Fall als eine Lamelle für eine Lamellenkupplung oder Lamellenbremse ausgebildet und weist einen Reibbelagträger 4 auf. Der Reibbelagträger 4 ist als eine stählerne Ringscheibe ausgebildet, die sich in der Zeichnungsebene erstreckt und einen inneren Rand 6 sowie einen äußeren Rand 8 umfasst. An dem inneren Rand 6 ist ein Mitnahmeprofil, vorzugsweise eine Innenverzahnung vorgesehen, die in den Figuren lediglich schematisch angedeutet und einstückig mit der Ringscheibe ausgebildet ist. Die Innenverzahnung dient der drehfesten Verbindung des Reibteils 2 mit einem Lamellenträger, ermöglicht jedoch ein axiales Verschieben des Reibteils 2 entlang des Lamellenträgers. Bei dem vorliegenden Reibteil 2 handelt es sich folglich um eine sogenannte Innenlamelle. Es sei jedoch darauf hingewiesen, dass es sich bei dem erfindungsgemäßen Reibteil 2 ebenso um eine Außenlamelle handeln könnte, bei der das Mitnahmeprofil, vorzugsweise eine Außenverzahnung dann an dem äußeren Rand 8 angeordnet wäre. Die Drehachse 10 des Reibteils 2 erstreckt sich senkrecht zur Ebene des Zeichnungsblattes, während die einander entgegengesetzten Umfangsrichtungen anhand der Pfeile 12 und 14 angedeutet sind.

An der dem Betrachter zugewandten Vorderseite des Reibbelagträgers 4 sowie an der dem Betrachter abgewandten Rückseite des Reibbelagträgers 4 (nicht dargestellt) ist jeweils ein Reibbelag 16 angeordnet, bei dem es sich in der dargestellten Ausführungsform um einen Papierreibbelag handelt. Nachstehend wird lediglich der Aufbau des Reibbelages 16 auf der Vorderseite des Reibbelagträgers 4 beschrieben, diese Beschreibung gilt jedoch auch entsprechend für den Reibbelag auf der dem Betrachter abgewandten Rückseite des Reibbelagträgers 4. Der Reibbelag 16 ist als sogenannter segmentierter Reibbelag ausgebildet und setzt sich aus mehreren voneinander beabstandeten Reibbelagsegmenten 18, 20, 22 zusammen. So sind die Reibbelagsegmente 18 als radial innenliegende Reibbelagsegmente ausgebildet, während die Reibbelagsegmente 20, 22 radial außenliegende Reibbelagsegmente 20, 22 ausbilden, wie dies später näher erläutert wird. Die Reibbelagsegmente 18, 20, 22 weisen Teilreibflächen 24, 26, 28 auf, die dem Reibbelagträger 4 abgewandt sind und gemeinsam eine im Wesentlichen ringförmige Reibfläche 30 des Reibteils 2 ausbilden.

Die ringförmige Reibfläche 30 weist einen Innenrand 32, der von dem inneren Rand 6 des Reibbelagträgers 4 beabstandet ist, und einen Außenrand 34 auf, der im Wesentlichen dem äußeren Rand 8 des Reibbelagträgers 4 entspricht. Dabei erstreckt sich der Innenrand 32 entlang eines inneren Umfangskreises 36, der in Fig. 2 angedeutet ist und einen ersten Umfangskreisradius r₁ hat. Entsprechend erstreckt sich der Außenrand 34 der Reibfläche 30 entlang eines äußeren Umfangskreises 38, der ebenfalls in Fig. 2 angedeutet ist und einen zweiten Umfangskreisradius r₂ aufweist. Die beiden Umfangskreise 36, 38 sind konzentrisch zueinander angeordnet, wobei der erste Umfangskreisradius r₁ kleiner als der zweite Umfangskreisradius r₂ ist, d. h. es gilt: r₁ < r₂ - Wie bereits zuvor erläutert, setzt sich der Reibbelag 16 aus mehreren voneinander beabstandeten Reibbelagsegmenten 18, 20, 22 zusammen, so dass zwischen den Reibbelagsegmenten 18, 20 22 ein Nutmuster entsteht, das in der Reibfläche 30 ausgebildet ist und nachstehend insbesondere unter Bezugnahme auf Fig. 2 eingehender beschrieben wird.

So ist in der Reibfläche 30 zunächst eine umlaufende erste Nut 40 vorgesehen. Die umlaufende erste Nut 40 erstreckt sich in Umfangsrichtung 12 bzw. 14 durchgehend über die Reibfläche 30 und ist in Umfangsrichtung 12, 14 geschlossen, d. h. ringförmig ausgebildet. Dabei grenzt die umlaufende erste Nut 40 weder an den Innenrand 32 noch an den Außenrand 34 der Reibfläche 30 an. Die umlaufende erste Nut 40 erstreckt sich zickzack- oder wellenförmig zwischen radial außenliegenden Umlenkpunkten 42 und radial innenliegenden Umlenkpunkten 44, wie dies insbesondere in Fig. 2 angedeutet ist. So umfasst die umlaufende erste Nut 40 mehrere erste Nutabschnitte 46, die sich in Umfangsrichtung 12 von den au-βenliegenden Umlenkpunkten 42 geradlinig zu den innenliegenden Umlenkpunkten 44 erstrecken. Darüber hinaus umfasst die umlaufende erste Nut 40 mehrere zweite Nutabschnitte 48, die sich in dieselbe Umfangsrichtung 12 von den innenliegenden Umlenkpunkten 44 geradlinig zu den au-βenliegenden Umlenkpunkten 42 erstrecken, so dass eine zickzackförmige erste Nut 40 ausgebildet ist.

Alle innenliegenden Umlenkpunkte 44 sind auf einem gemeinsamen inneren Kreis 50 mit einem ersten Radius r₃ angeordnet, während alle außenliegenden Umlenkpunkte 42 auf einem gemeinsamen äußeren Kreis 52 mit einem zweiten Radius r₄ angeordnet sind. Die beiden Kreise 50 und 52 sind konzentrisch zueinander und konzentrisch zu den Umfangskreisen 36, 38 angeordnet, wobei der erste Radius r₃ kleiner als der zweite Radius r₄ ausgebildet ist. Die Differenz zwischen dem ersten Radius r₃ und dem ersten Umfangskreisradius r₁ und die Differenz zwischen dem zweiten Radius r₄ und dem zweiten Umfangskreisradius r₂ beträgt mindestens 3 mm, besonders bevorzugt mehr als 4 mm. Dies bedeutet: r₃ - r₁ ≥ 3 mm oder r₃ - r₁ > 4 mm bzw. r₂ - r₄ ≥ 3 mm oder r₂ - r₄ > 4 mm. Darüber hinaus ist das Verhältnis zwischen der Differenz aus dem ersten und zweiten Umfangskreisradius r₁, r₂ und der Differenz aus dem ersten und zweiten Radius r₃, r₄ größer als 3:2, besonders bevorzugt größer als 3:1. Dies bedeutet: (r₂ - r₁) : (r₄ - r₃) > (3 : 2) bzw. (r₂ - r₁) : (r₄ - r₃) > (3 . 1). Dank dieser Vorgaben ist ein ausreichender Abstand zwischen der umlaufenden ersten Nut 40 und dem Innenrand 32 der Reibfläche 30 einerseits sowie ein ausreichender Abstand zwischen der umlaufenden ersten Nut 40 und dem Außenrand 34 der Reibfläche 30 andererseits sichergestellt, so dass die Herstellung sowie die Funktion des Reibteils 2 im Betrieb sichergestellt ist, wie dies später näher erläutert wird.

In der Reibfläche 30 sind ferner mehrere zweite Nuten 54 vorgesehen, die sich ausgehend von dem Innenrand 32 der Reibfläche 30 geradlinig entlang einer Radialen zu den außenliegenden Umlenkpunkten 42 erstrecken, um in die umlaufende erste Nut 40 zu münden. Dabei enden die zweiten Nuten 54 an den außenliegenden Umlenkpunkten 42, d. h. die zweiten Nuten 54 kreuzen die erste umlaufende Nut 40 nicht bzw. erstrecken sich nicht über den außenliegenden Umlenkpunkt 42 hinaus. Auch sind keine weiteren Nuten innerhalb der Reibfläche 30 vorgesehen, die an dem außenliegenden Umlenkpunkt 42 in die umlaufende erste Nut 40 münden.

In der ringförmigen Reibfläche 30 des Reibteils 2 sind ferner mehrere dritte Nuten 56 vorgesehen, die sich jeweils ausgehend von dem Außenrand 34 der Reibfläche 30 geradlinig entlang einer Radialen in die umlaufende erste Nut 40 erstrecken. Dabei münden die dritten Nuten 56 an sogenannten Einmündungspunkten 58 in die umlaufende erste Nut 40 ein, wobei die Einmündungspunkte 58 entlang der umlaufenden ersten Nut 40 und zwischen den Umlenkpunkten 42, 44 angeordnet sind. Die eine Hälfte der dritten Nuten 56 mündet in die ersten Nutabschnitte 46 der umlaufenden ersten Nut 40, während die andere Hälfte der dritten Nuten 56 in die zweiten Nutabschnitte 48 der umlaufenden ersten Nut 40 mündet. Auch die dritten Nuten 56 enden jeweils an den Einmündungspunkten 58, ohne die umlaufende erste Nut 40 in diesem Bereich zu kreuzen. Auch sind keine weiteren Nuten vorgesehen, die im Bereich der Einmündungspunkte 58 in die umlaufende erste Nut 40 münden. Die Einmündungspunkte 58 sind auf einem zwischenliegenden Kreis 60 angeordnet, der einen dritten Radius r₅ aufweist. Der zwischenliegende Kreis 60 ist konzentrisch zu dem inneren und äußeren Kreis 50, 52 angeordnet, wobei der dritte Radius r₅ größer als der erste Radius r₃ und kleiner als der zweite Radius r₄ ist. Bei dem zwischenliegenden Kreis 60 handelt es sich vorzugsweise um einen mittleren Kreis, d. h. es gilt: r₅ - r₃ = r₄ - r₅.

In der ringförmigen Reibfläche 30 sind ferner vierte Nuten 62 vorgesehen, die sich jeweils ausgehend von dem Innenrand 32 der Reibfläche 30 geradlinig entlang einer Radialen zu den innenliegenden Umlenkpunkten 44 erstrecken, um in die umlaufende erste Nut 40 zu münden. Die vierten Nuten 62 enden an den innenliegenden Umlenkpunkten 44, d. h. die vierten Nuten 62 kreuzen die umlaufende erste Nut 40 nicht im Bereich der innenliegenden Umlenkpunkte 44 und stehen somit nicht in radialer Richtung nach außen über den Umlenkpunkt 44 bzw. die umlaufende erste Nut 40 hervor. Auch weist das Nutmuster keine weiteren Nuten auf, die neben der vierten Nut 62 im Bereich des innenliegenden Umlenkpunktes 44 in die umlaufende erste Nut 40 münden.

Es hat sich als vorteilhaft herausgestellt, wenn die in einem außenliegenden Umlenkpunkt 42 zusammengeführten ersten und zweiten Nutabschnitte 46, 48 der umlaufenden ersten Nut 40 einen inneren Winkel α einschlie-βen, der größer als 130° ist und vorzugsweise zwischen 140° und 145° liegt. Auch sollte der Nutquerschnitt der umlaufenden ersten Nut 40, also der Querschnitt quer zur Erstreckungsrichtung der umlaufenden ersten Nut 40, an den Umlenkpunkten 42, 44 genauso groß wie die Nutquerschnitte der ersten und zweiten Nutabschnitte 46, 48 der umlaufenden ersten Nut 40 sein. So sollte insbesondere auf ein vergrößertes Reservoir für das Kühl- und Schmiermittel im Bereich derjenigen Umlenkpunkte 42, 44 verzichtet werden, in die die zweiten oder vierten Nuten 54, 62 münden. Darüber hinaus sollte der kleinste Nutquerschnitt der zweiten und vierten Nut 54, 62 größer oder kleiner als der kleinste Nutquerschnitt der dritten Nut 56 ausgebildet sein. So ist es bevorzugt, wenn der kleinste Nutquerschnitt der zweiten und vierten Nut 54, 62 größer als der kleinste Nutquerschnitt der dritten Nut 56 ist, wenn die Kühl- und Schmiermittelzufuhr in radialer Richtung nach außen erfolgt, so dass in der umlaufenden ersten Nut 40 eine Verlangsamung des Kühl- und Schmiermittels auftritt, die zu einer verbesserten Wärmeaufnahme führt. Auf diese Weise können die außenliegenden Reibbelagsegmente 20, 22 besonders effektiv gekühlt werden. So ist der kleinste Nutquerschnitt der zweiten und vierten Nut 54, 62 größer als der größte Nutquerschnitt der dritten Nut 56, um diesen Vorteil noch zu verstärken.

Wie bereits zuvor erläutert, sind die Reibbelagsegmente 18, 20, 22 in innenliegende Reibbelagsegmente 18, die in radialer Richtung nach innen innerhalb der umlaufenden ersten Nut 40 angeordnet sind, und in außenliegende Reibbelagsegmente 20, 22 unterteilt, die in radialer Richtung nach außen außerhalb der umlaufenden ersten Nut 40 angeordnet sind. Die innenliegenden Reibbelagsegmente 18 weisen jeweils eine Kante 64, die der zweiten Nut 54 zugewandt ist, und eine Kante 66 auf, die der vierten Nut 62 zugewandt ist. Auch die außenliegenden Reibbelagsegmente 20, 22 weisen jeweils zwei Kanten 68 auf, die den dritten Nuten 56 zugewandt sind. Um eine Beschädigung dieser Kanten 64, 66, 68 während des Betriebes sowie bereits bei der Anbringung der Reibbelagsegmente 18, 20, 22 an dem Reibbelagträger 4 zu vermeiden, beträgt die Kantenlänge der Kanten 64, 66, 68 mindestens 2 mm, vorzugsweise mehr als 3 mm. Da die außenliegenden Reibbelagsegmente 20, 22 einer besonders großen thermischen Belastung während des Betriebes der reibschlüssig arbeitenden Einrichtung unterworfen sind, ist das Nutmuster derart ausgebildet, dass die außenliegenden Reibbelagsegmente 20, 22 jeweils eine Teilreibfläche 26, 28 der Reibfläche 30 ausbilden, die kleiner als 60 mm², besonders bevorzugt kleiner als 50 mm² ist. Hierdurch kann der temperaturbedingte Verschleiß an den außenliegenden Reibbelagsegmenten 20, 22 nachhaltig verringert werden.

In der ersten Ausführungsform nach den Fig. 1 und 2 wird das Nutmuster in der Reibfläche 30 vollständig von der umlaufenden ersten Nut 40, den zweiten Nuten 54, den dritten Nuten 56 und den vierten Nuten 62 gebildet. So kann das Nutmuster zwar weitere Nuten umfassen, bei denen es sich nicht um die erste Nut 40, die zweiten Nuten 54, die dritten 56 und die vierten Nuten 62 handelt, jedoch sollte der Anteil der zuvor genannten speziellen Nuten an dem Nutmuster mehr als 80 %, vorzugsweise mehr als 90 % betragen.

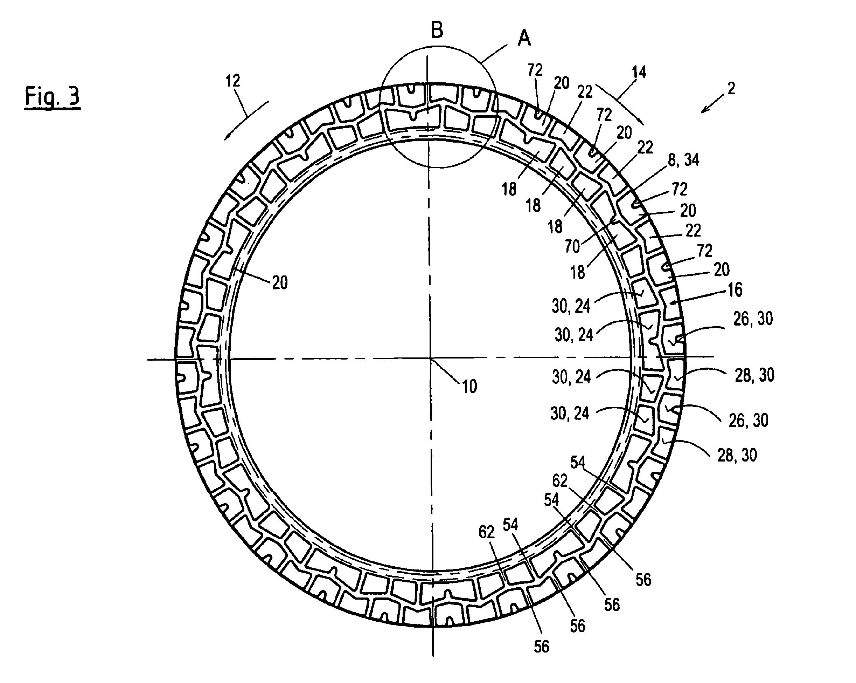

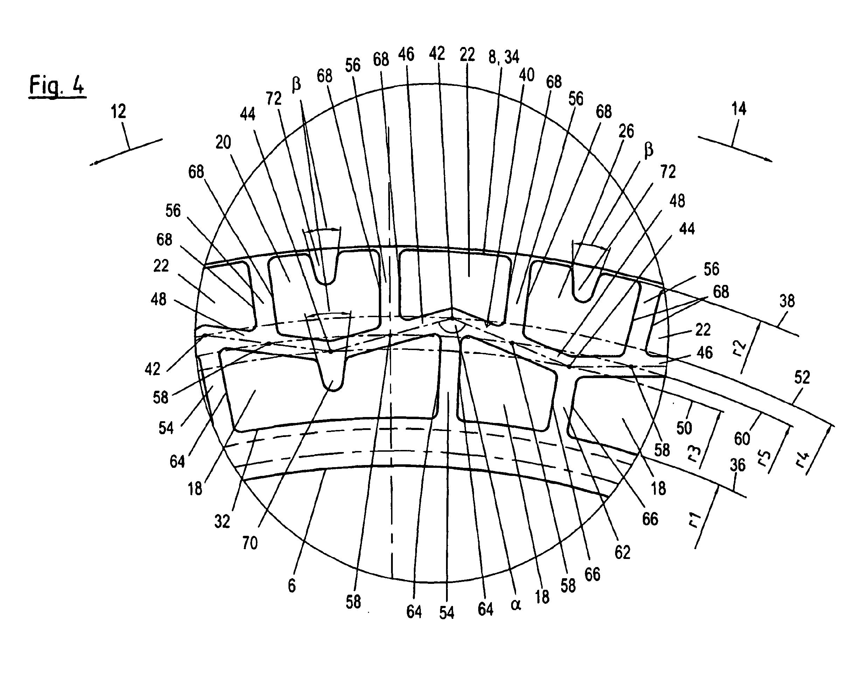

Nachstehend wird unter Bezugnahme auf die Fig. 3 und 4 eine zweite Ausführungsform des erfindungsgemäßen Reibteils 2 beschrieben. Die zweite Ausführungsform entspricht zum Großteil der ersten Ausführungsform aus den Fig. 1 und 2, so dass nachstehend lediglich auf die Unterschiede zur ersten Ausführungsform eingegangen wird, dieselben Bezugszeichen für gleiche oder ähnliche Teile verwendet werden und die vorangehende Beschreibung diesbezüglich entsprechend gilt.

Bei der zweiten Ausführungsform nach den Fig. 3 und 4 sind ferner erste Sacknuten 70 in der Reibfläche 30 vorgesehen, die sich ausgehend von den innenliegenden Umlenkpunkten 44 radial nach innen erstrecken, jedoch führen diese Sacknuten 70 - wie dies der Name bereits nahe legt - nicht bis zum Innenrand 32 der Reibfläche 30. Auf die unter Bezugnahme auf die Fig. 1 und 2 beschriebenen vierten Nuten 62, die sich bis zum Innenrand 32 der Reibfläche 30 erstrecken, wird jedoch nicht gänzlich verzichtet. Vielmehr ist den in Umfangsrichtung 12 bzw. 14 aufeinander folgenden innenliegenden Umlenkpunkten 44 abwechselnd jeweils eine erste Sacknut 70 oder eine vierte Nut 62 zugeordnet. Die ersten Sacknuten 70 erstrecken sich im Wesentlichen geradlinig entlang einer Radialen des Reibteils 2. Die ersten Sacknuten 70 führen zu einer besonders guten Kühlung der außenliegenden Reibbelagsegmente 20, die den innenliegenden Umlenkpunkten 44 zugeordnet sind und daher in der Regel eine größere Teilreibfläche 26 als die außenliegenden Reibbelagsegmente 22 mit einer Teilreibfläche 28 aufweisen.

Um die thermische Belastbarkeit der außenliegenden Reibbelagsegmente 20 sowie des gesamten Reibteils 2 weiter zu verbessern, sind ferner zweite Sacknuten 72 in der Reibfläche 30 vorgesehen, die sich jeweils ausgehend von dem Außenrand 34 der Reibfläche 30 geradlinig entlang einer Radialen des Reibteils 2 nach innen erstrecken. Die zweiten Sacknuten 72 können dabei sowohl in den außenliegenden Reibbelagsegmenten 20 als auch in den au-βenliegenden Reibbelagsegmenten 22 vorgesehen sein. Es ist jedoch bevorzugt, dass die zweiten Sacknuten 72 in den den innenliegenden Umlenkpunkten 44 zugeordneten au-βenliegenden Reibbelagsegmenten 20 vorzusehen, um deren größere Teilreibfläche 26 weiter zu verringern. So sollten derartige zweite Sacknuten 72 in allen den innenliegenden Umlenkpunkten 44 zugeordneten außenliegenden Reibbelagsegmenten 20 vorgesehen sein.

Für die Kühlung der Reibbelagsegmente 18, 20, 22 hat es sich als besonders vorteilhaft herausgestellt, wenn die ersten und zweiten Sacknuten 70, 72 radial nach innen verjüngt sind. Für das Verschleißverhalten hat es sich als besonders vorteilhaft erwiesen, wenn die Ränder der ersten und zweiten Sacknuten 70, 72 einen Winkel β einschließen, der zwischen 20° und 25° beträgt. Besonders vorteilhaft war in diesem Zusammenhang ein Winkel β zwischen 22° und 23°.

Bei der zweiten Ausführungsform nach den Fig. 3 und 4 wird das Nutmuster in der Reibfläche 30 vollständig von der umlaufenden ersten Nut 40, den zweiten Nuten 54, den dritten Nuten 56, den vierten Nuten 62 und den Sacknuten 70, 72 gebildet. Auch bei dieser Ausführungsform können jedoch weitere Nuten in der Reibfläche 30 vorgesehen sein, bei denen es sich nicht um die umlaufende erste Nut 40, die zweiten Nuten 54, die dritten Nuten 56, die vierten Nuten 62 und die Sacknuten 70, 72 handelt. Jedoch sollte auch in diesem Fall der Anteil der zuvor beschriebenen Nuten 40, 54, 56, 62, 70, 72 an dem Nutmuster in der Reibfläche 30 mehr als 80 %, vorzugsweise mehr als 90 % betragen. Auch sollten die weiteren Nuten nicht in den Bereichen der Umlenkpunkte 42, 44 und der Einmündungspunkte 58 in die umlaufende erste Nut 40 münden.

### Bezugszeichenliste

- 2: Reibteil
- 4: Reibbelagträger
- 6: innerer Rand
- 8: äußerer Rand
- 10: Drehachse
- 12: Umfangsrichtung
- 14: Umfangsrichtung
- 16: Reibbelag
- 18: innenliegende Reibbelagsegmente
- 20: außenliegende Reibbelagsegmente
- 22: außenliegende Reibbelagsegmente
- 24: Teilreibfläche
- 26: Teilreibfläche
- 28: Teilreibfläche
- 30: Reibfläche
- 32: Innenrand
- 34: Außenrand
- 36: innerer Umfangskreis
- 38: äußerer Umfangskreis
- 40: erste Nut
- 42: außenliegende Umlenkpunkte
- 44: innenliegende Umlenkpunkte
- 46: erste Nutabschnitte
- 48: zweite Nutabschnitte
- 50: innerer Kreis
- 52: äußerer Kreis
- 54: zweite Nuten
- 56: dritte Nuten
- 58: Einmündungspunkte
- 60: zwischenliegender Kreis
- 62: vierte Nuten
- 64: Kante
- 66: Kante
- 68: Kanten
- 70: erste Sacknuten
- 72: zweite Sacknuten

- r₁: erster Umfangskreisradius
- r₂: zweiter Umfangskreisradius
- r₃: erster Radius
- r₄: zweiter Radius
- r₅: dritter Radius

- α: innerer Winkel
- β: Winkel

## Patentansprüche

1. Reibteil (2) für eine reibschlüssig arbeitende Einrichtung mit einer ringförmigen Reibfläche (30), die einen Innenrand (32) und einen Außenrand (34) aufweist, wobei in der Reibfläche (30) eine umlaufende erste Nut (40), die sich zickzack- oder wellenförmig zwischen radial innenliegenden und radial außenliegenden Umlenkpunkten (44, 42) erstreckt und mehrere zweite Nuten (54), die sich ausgehend von dem Innenrand (32) zu de außenliegenden Umlenkpunkten (42) erstrecken, vorgesehen sind, **dadurch gekennzeichnet, dass** mehrere dritte Nuten (56) vorgesehen sind, die sich ausgehend von dem Außenrand (34) in die umlaufende erste Nut (40) erstrecken und zwischen den Umlenkpunkten (42, 44) an Einmündungspunkten (58) in die umlaufende erste Nut (40) münden.

2. Reibteil (2) nach Anspruch 1, **dadurch gekennzeichnet**, dann die umlaufende erste Nut (40) mehrere erste Nutabschnitte (46), die sich in die eine Umfangsrichtung (12) von den außenliegenden Umlenkpunkten (42) zu den innenliegenden Umlenkpunkten (44) erstrecken, und mehrere zweite Nutabschnitte (48) umfasst, die sich in dieselbe Umfangsrichtung (12) von den innenliegenden Umlenkpunkten (44) zu den au-βenliegenden Umlenkpunkten (42) erstrecken,
wobei die ersten und zweiten Nutabschnitte (46, 48) der umlaufenden ersten Nut (40) vorzugsweise geradlinig ausgebildet sind,
wobei vorzugsweise dritte Nuten (56), die in die ersten Nutabschnitte (46) der umlaufenden ersten Nut (40) münden, und dritte Nuten (56) vorgesehen sind, die in die zweiten Nutabschnitte (48) der umlaufenden ersten Nut (40) münden.

3. Reibteil (2) nach einem der Ansprüche 1 oder 2, **dadurch gekennzeichnet, dass** ferner vierte Nuten (62) vorgesehen sind, die sich ausgehend von dem Innenrand (32) zu den innenliegenden Umlenkpunkten (44) erstrecken.

4. Reibteil (2) nach einem der vorangehenden Ansprüche, **dadurch gekennzeichnet, dass** ferner erste Sacknuten (70) vorgesehen sind, die sich ausgehend von den innenliegenden Umlenkpunkten (44) radial nach innen erstrecken,
wobei vorzugsweise den in Umfangsrichtung (12, 14) aufeinander folgenden innenliegenden Umlenkpunkten (44) abwechselnd jeweils eine erste Sacknut (70) oder eine vierte Nut (62) zugeordnet ist.

5. Reibteil (2) nach einem der vorangehenden Ansprüche, **dadurch gekennzeichnet, dass** die in einem außenliegenden Umlenkpunkt (42) zusammengeführten ersten und zweiten Nutabschnitte (46, 48) der umlaufenden ersten Nut (40) einen inneren Winkel (α) einschließen, der größer als 130° ist, vorzugsweise zwischen 140° und 145° liegt.

6. Reibteil (2) nach einem der vorangehenden Ansprüche, **dadurch gekennzeichnet, dass** der Nutquerschnitt der umlaufenden ersten Nut (40) an den Umlenkpunkten (42, 44) genauso groß wie die Nutquerschnitte der ersten und zweiten Nutabschnitte (46, 48) der umlaufenden ersten Nut (40) ist.

7. Reibteil (2) nach einem der vorangehenden Ansprüche, **dadurch gekennzeichnet, dass** der kleinste Nutquerschnitt der zweiten und/oder vierten Nut (54, 62) größer oder kleiner, vorzugsweise größer, als der kleinste Nutquerschnitt der dritten Nut (56) ist.

8. Reibteil (2) nach einem der vorangehenden Ansprüche, **dadurch gekennzeichnet, dass** der kleinste Nutquerschnitt der zweiten und/oder vierten Nut (54, 62) größer als der größte Nutquerschnitt der dritten Nut (56) ist.

9. Reibteil (2) nach einem der vorangehenden Ansprüche, **dadurch gekennzeichnet, dass** sich die zweiten Nuten (54), die dritten Nuten (56), die vierten Nuten (62) und/oder die Sacknuten (70, 72), vorzugsweise geradlinig, entlang einer Radialen des Reibteils (2) erstrecken.

10. Reibteil (2) nach einem der vorangehenden Ansprüche, **dadurch gekennzeichnet, dass** das Reibteil (2) einen Reibbelagträger (4) aufweist, wobei die Reibfläche (30) von einem auf einem Reibbelagträger (4) aufgebrachten Reibbelag (16) aus mehreren voneinander beabstandeten Reibbelagsegmenten (18, 20, 22) gebildet ist, zwischen denen die umlaufende erste Nut (40), die zweiten Nuten (54) und die dritten Nuten (56) sowie gegebenenfalls auch die vierten Nuten (62) ausgebildet sind,
wobei der Reibbelag (16) bezogen auf die umlaufende erste Nut (40) vorzugsweise radial außenliegende Reibbelagsegmente (20, 22) und radial innenliegende Reibbelagsegmente (18) aufweist und die den dritten Nuten (56) zugewandten Kanten (68) der außenliegenden Reibbelagsegmente (20, 22) sowie die den zweiten und/oder vierten Nuten (54, 62) zugewandten Kanten (64, 66) der innenliegenden Reibbelagsegmente (18) eine Kantenlänge von mindestens 2 mm, vorzugsweise mehr als 3 mm aufweisen, und
die außenliegenden Reibbelagsegmente (20, 22) besonders bevorzugt jeweils eine Teilreibfläche (26, 28) der Reibfläche (30) ausbilden, die kleiner als 60 mm² vorzugsweise kleiner als 50 mm² ist.

11. Reibteil (2) nach einem der Ansprüche 4 bis 10, **dadurch gekennzeichnet, dass** ferner zweite Sacknuten (72) vorgesehen sind, die sich ausgehend von dem Au-βenrand (34) radial nach innen erstrecken,
wobei die zweiten Sacknuten (72) vorzugsweise in den den innenliegenden Umlenkpunkten (44) zugeordneten außenliegenden Reibbelagsegmenten (20), besonders bevorzugt in allen den innenliegenden Umlenkpunkten (44) zugeordneten außenliegenden Reibbelagsegmenten (20) vorgesehen sind.

12. Reibteil (2) nach einem der vorangehenden Ansprüche 4 bis 11, **dadurch gekennzeichnet, dass** die ersten und/oder zweiten Sacknuten (70, 72) radial nach innen verjüngt sind,
wobei die Ränder der ersten und/oder zweiten Sacknuten (70, 72) vorzugsweise einen Winkel zwischen 20° und 25°, besonders bevorzugt einen Winkel zwischen 22° und 23° einschließen.

13. Reibteil (2) nach einem der vorangehenden Ansprüche, **dadurch gekennzeichnet, dass** die innenliegenden Umlenkpunkte (44) auf einem inneren Kreis (50) mit einem ersten Radius (r₃) und die außenliegenden Umlenkpunkte (42) auf einem äußeren Kreis (52) mit einem zweiten Radius (r₄) angeordnet sind, die konzentrisch zueinander angeordnet sind, wobei der erste Radius (r₃) kleiner als der zweite Radius (r₄) ist,
wobei die Einmündungspunkte (58) vorzugsweise auf einem zwischenliegenden, besonders bevorzugt auf einem mittleren Kreis (60) mit einem dritten Radius (r₅) angeordnet sind, der konzentrisch zu dem inneren und äußeren Kreis (50, 52) angeordnet ist, wobei der dritte Radius (r₅) größer als der erste Radius (r₃) und kleiner als der zweite Radius (r₄) ist.

14. Reibteil (2) nach Anspruch 13, **dadurch gekennzeichnet, dass** sich der Innenrand (32) der Reibfläche (30) entlang eines inneren Umfangskreises (36) mit einem ersten Umfangskreisradius (r₁) und der Außenrand (34) der Reibfläche (30) entlang eines äußeren Umfangskreises (38) mit einem zweiten Umfangskreisradius (r₂) erstreckt, wobei die Umfangskreise (36, 38) konzentrisch zueinander, vorzugsweise auch konzentrisch zu dem inneren und äußeren Kreis (50, 52) angeordnet sind,
wobei die Differenz zwischen dem ersten Radius (r₃) und dem ersten Umfangskreisradius (r₁) und/oder die Differenz zwischen dem zweiten Radius (r₄) und dem zweiten Umfangskreisradius (r₂) vorzugsweise mindestens 3 mm, besonders bevorzugt mehr als 4 mm beträgt,
wobei das Verhältnis zwischen der Differenz aus dem ersten und zweiten Umfangskreisradius (r₁, r₂) und der Differenz aus dem ersten und zweiten Radius (r₃, r₄) vorzugsweise größer als 3 zu 2, besonders bevorzugt größer als 3 zu 1 ist.

15. Reibteil (2) nach einem der vorangehenden Ansprüche, **dadurch gekennzeichnet, dass** die dritten Nuten (56) an den Einmündungspunkten (58) enden, wobei die zweiten Nuten (54) vorzugsweise an den außenliegenden Umlenkpunkten (42) und die vierten Nuten (62) vorzugsweise an den innenliegenden Umlenkpunkten (44) enden, oder/und dass das Nutmuster in der Reibfläche (30) zu mehr als 80 %, vorzugsweise zu mehr als 90 %, besonders bevorzugt vollständig von der umlaufenden ersten Nut (40), den zweiten Nuten (54) und den dritten Nuten (56) sowie gegebenenfalls den vierten Nuten (62), den ersten Sacknuten (70) und/oder den zweiten Sacknuten (72) gebildet wird.

## Claims

1. Friction part (2) for a frictionally acting device, having an annular friction surface (30) which has an inner edge (32) and an outer edge (34), with the friction surface (30) having provided in it an encircling first groove (40) which extends in zigzag or undulating form between radially inner and radially outer deflection points (44, 42), and a plurality of second grooves (54) which extend from the inner edge (32) to the outer deflection points (42), **characterized in that** a plurality of third grooves (56) are provided which extend from the outer edge (34) into the encircling first groove (40) and which open into the encircling first groove (40) at opening-in points (58) between the deflection points (42, 44).

2. Friction part (2) according to Claim 1, wherein the encircling first groove (40) comprises a plurality of first groove portions (46) which extend in the one circumferential direction (12) from the outer deflection points (42) to the inner deflection points (44), and a plurality of second groove portions (48) which extend in the same circumferential direction (12) from the inner deflection points (44) to the outer deflection points (42),
with the first and second groove portions (46, 48) of the encircling first groove (40) being preferably of rectilinear design,
with third grooves (56) which open into the first groove portions (46) of the encircling first groove (40) and third grooves (56) which open into the second groove portions (48) of the encircling first groove (40) preferably being provided.

3. Friction part (2) according to one of Claims 1 or 2, wherein fourth grooves (62) which extend from the inner edge (32) to the inner deflection points (44) are also provided.

4. Friction part (2) according to one of the preceding claims, wherein first blind grooves (70) which extend radially inward from the inner deflection points (44) are also provided,
with successive inner deflection points (44) in the circumferential direction (12, 14) preferably being assigned in each case alternately a first blind groove (70) or a fourth groove (62).

5. Friction part (2) according to one of the preceding claims, wherein the first and second groove portions (46, 48), which are joined at an outer deflection point (42), of the encircling first groove (40) enclose an inner angle (α) which is greater than 130° and preferably between 140° and 145°.

6. Friction part (2) according to one of the preceding claims, wherein the groove cross section of the encircling first groove (40) at the deflection points (42, 44) is of the same size as the groove cross sections of the first and second groove portions (46, 48) of the encircling first groove (40).

7. Friction part (2) according to one of the preceding claims, wherein the smallest groove cross section of the second and/or fourth groove (54, 62) is larger or smaller, preferably larger, than the smallest groove cross section of the third groove (56).

8. Friction part (2) according to one of the preceding claims, wherein the smallest groove cross section of the second and/or fourth groove (54, 62) is larger than the largest groove cross section of the third groove (56).

9. Friction part (2) according to one of the preceding claims, wherein the second grooves (54), the third grooves (56), the fourth grooves (62) and/or the blind grooves (70, 72) extend, preferably rectilinearly, along a radial line of the friction part (2).

10. Friction part (2) according to one of the preceding claims, wherein the friction part (2) has a friction lining carrier (4), with the friction surface (30) of a friction lining (16) which is attached to a friction lining carrier (4) being formed from a plurality of spaced-apart friction lining segments (18, 20, 22), between which are formed the encircling first groove (40), the second grooves (54) and the third grooves (56) and if appropriate also the fourth grooves (62),
with the friction lining (16) having, in relation to the encircling first groove (40), preferably radially outer friction lining segments (20, 22) and radially inner friction lining segments (18), and with those edges (68) of the outer friction lining segments (20, 22) which face toward the third grooves (56) and those edges (64, 66) of the inner friction lining segments (18) which face toward the second and/or fourth grooves (54, 62) having an edge length of at least 2 mm, preferably more than 3 mm, and
the outer friction lining segments (20, 22) particularly preferably form in each case a partial friction surface (26, 28), which is smaller than 60 mm² and preferably smaller than 50 mm², of the friction surface (30).

11. Friction part (2) according to one of Claims 4 to 10, wherein second blind grooves (72) which extend radially inward from the outer edge (34) are also provided,
with the second blind grooves (72) being provided preferably in the outer friction lining segments (20) assigned to the inner deflection points (44), particularly preferably in all the outer friction lining segments (20) assigned to the inner deflection points (44).

12. Friction part (2) according to one of the preceding Claims 4 to 11, wherein the first and/or second blind grooves (70, 72) are tapered in the radially inward direction,
with the edges of the first and/or second blind grooves (70, 72) enclosing preferably an angle of between 20° and 25°, particularly preferably an angle of between 22° and 23°.

13. Friction part (2) according to one of the preceding claims, wherein the inner deflection points (44) are arranged on an inner circle (50) with a first radius (r₃) and the outer deflection points (42) are arranged on an outer circle (52) with a second radius (r₄), which inner circle (50) and outer circle (52) are arranged concentrically with respect to one another, with the first radius (r₃) being smaller than the second radius (r₄),
with the opening-in points (58) being arranged preferably on an interposed circle (60), particularly preferably on a mean circle (60) with a third radius (r₅), which mean circle (60) is arranged concentrically with respect to the inner and outer circles (50, 52), with the third radius (r₅) being larger than the first radius (r₃) and smaller than the second radius (r₄).

14. Friction part (2) according to Claim 13, wherein the inner edge (32) of the friction surface (30) extends along an inner circumferential circle (36) with a first circumferential circle radius (r₁) and the outer edge (34) of the friction surface (30) extends along an outer circumferential circle (38) with a second circumferential circle radius (r₂), with the circumferential circles (36, 38) being arranged concentrically with respect to one another and preferably also concentrically with respect to the inner and outer circles (50, 52),
with the difference between the first radius (r₃) and the first circumferential circle radius (r₁) and/or the difference between the second radius (r₄) and the second circumferential circle radius (r₂) preferably being at least 3 mm, particularly preferably more than 4 mm,
with the ratio between the difference in the first and second circumferential circle radii (r₁, r₂) and the difference in the first and second radii (r₃, r₄) being preferably greater than 3 to 2, particularly preferably greater than 3 to 1.

15. Friction part (2) according to one of the preceding claims, wherein the third grooves (56) end at the opening-in points (58), with the second grooves (54) ending preferably at the outer deflection points (42) and the fourth grooves (62) ending preferably at the inner deflection points (44) and/or in that more than 80%, preferably more than 90%, particularly preferably the whole of the groove pattern in the friction surface (30) is formed by the encircling first groove (40), the second grooves (54) and the third grooves (56) and if appropriate the fourth grooves (62), the first blind grooves (70) and/or the second blind grooves (72).

## Revendications

1. Pièce de friction (2) pour un dispositif fonctionnant par engagement par friction, comprenant une surface de friction de forme annulaire (30), qui présente un bord interne (32) et un bord externe (34), une première rainure périphérique (40), qui s'étend en zigzag ou de manière ondulée entre des points d'inflexion (44, 42) situés radialement à l'intérieur et radialement à l'extérieur, étant prévue dans la surface de friction (30), et plusieurs deuxièmes rainures (54) étant prévues, lesquelles s'étendent depuis le bord intérieur (32) jusqu'aux points d'inflexion situés à l'extérieur (42), **caractérisée en ce que** plusieurs troisièmes rainures (56) sont prévues, lesquelles s'étendent depuis le bord extérieur (34) dans la première rainure périphérique (40) et débouchent entre les points d'inflexion (42, 44) en des points d'embouchure (58) dans la première rainure périphérique (40).

2. Pièce de friction (2) selon la revendication 1, **caractérisée en ce que** la première rainure périphérique (40) comprend plusieurs premières portions de rainure (46) qui s'étendent dans une direction périphérique (12) depuis les points d'inflexion situés à l'extérieur (42) jusqu'aux points d'inflexion situés à l'intérieur (44), et plusieurs deuxièmes portions de rainure (48) qui s'étendent dans la même direction périphérique (12) depuis les points d'inflexion situés à l'intérieur (44) jusqu'aux points d'inflexion situés à l'extérieur (42),
les premières et deuxièmes portions de rainure (46, 48) de la première rainure périphérique (40) étant réalisées de préférence sous forme rectiligne,
des troisièmes rainures (56), qui débouchent dans les premières portions de rainure (46) de la première rainure périphérique (40) étant prévues de préférence et s'étendant dans les deuxièmes portions de rainure (48) de la première rainure périphérique (40).

3. Pièce de friction (2) selon la revendication 1 ou 2, **caractérisée en ce qu'**en outre des quatrièmes rainures (62) sont prévues, lesquelles s'étendent depuis le bord intérieur (32) jusqu'aux points d'inflexion situés à l'intérieur (44).

4. Pièce de friction (2) selon l'une quelconque des revendications précédentes, **caractérisée en ce qu'**en outre des premières rainures borgnes (70) sont prévues, lesquelles s'étendent radialement vers l'intérieur depuis les points d'inflexion situés à l'intérieur (44),
une première rainure borgne (70) ou une quatrième rainure (62) étant associée en alternance à chaque fois aux points d'inflexion successifs dans la direction périphérique (12, 14) situés à l'intérieur (44).

5. Pièce de friction (2) selon l'une quelconque des revendications précédentes, **caractérisée en ce que** les premières et deuxièmes portions de rainure (46, 48) se réunissant en un point d'inflexion situé à l'extérieur (42), de la première rainure périphérique (40), forment un angle intérieur (α) qui est supérieur à 130°, de préférence compris entre 140° et 145°.

6. Pièce de friction (2) selon l'une quelconque des revendications précédentes, **caractérisée en ce que** la section transversale de rainure de la première rainure périphérique (40) au niveau des points d'inflexion (42, 44) est aussi grande que la section transversale de rainure des premières et deuxièmes portions de rainure (46, 48) de la première rainure périphérique (40).

7. Pièce de friction (2) selon l'une quelconque des revendications précédentes, **caractérisée en ce que** la plus petite section transversale de rainure de la deuxième et/ou quatrième rainure (54, 62) est supérieure ou inférieure, de préférence supérieure, à la plus petite section transversale de rainure de la transmission rainure (56).

8. Pièce de friction (2) selon l'une quelconque des revendications précédentes, **caractérisée en ce que** la plus petite section transversale de rainure de la deuxième et/ou quatrième rainure (54, 62) est supérieure à la plus grande section transversale de rainure de la troisième rainure (56).

9. Pièce de friction (2) selon l'une quelconque des revendications précédentes, **caractérisée en ce que** les deuxièmes rainures (54), les troisièmes rainures (56), les quatrièmes rainures (62) et/ou les rainures borgnes (70, 72) s'étendent de préférence en ligne droite le long d'une radiale de la pièce de friction (2).

10. Pièce de friction (2) selon l'une quelconque des revendications précédentes, **caractérisée en ce que** la pièce de friction (2) présente un support de garniture de friction (4), la surface de friction (30) d'une garniture de friction (16) appliquée sur un support de garniture de friction (4) se composant de plusieurs segments de garniture de friction espacés les uns des autres (18, 20, 22), entre lesquels sont réalisées la première rainure périphérique (40), les deuxièmes rainures (54) et les troisièmes rainures (56) ainsi qu'éventuellement les quatrièmes rainures (62),
la garniture de friction (16) présentant par rapport à la première rainure périphérique (40), de préférence des segments de garniture de friction situés radialement à l'extérieur (20, 22) et des segments de garniture de friction situés radialement à l'intérieur (18), et les arêtes (68) des segments de garniture de friction situés radialement à l'extérieur (20, 22), tournées vers les troisièmes rainures (56), ainsi que les arêtes (64, 66) des segments de garniture de friction situés radialement à l'intérieur (18), tournées vers les deuxièmes et/ou quatrièmes rainures (54, 62), présentant une longueur d'arête d'au moins 2 mm, de préférence de plus de 3 mm, et
les segments de garniture de friction situés radialement à l'extérieur (20, 22) constituent particulièrement préférablement à chaque fois une surface de friction partielle (26, 28) de la surface de friction (30), qui est plus inférieure à 60 mm², de préférence inférieure à 50 mm².

11. Pièce de friction (2) selon l'une quelconque des revendications 4 à 10, **caractérisée en ce qu'**en outre, des deuxièmes rainures borgnes (72) sont prévues, lesquelles s'étendent à partir du bord extérieur (34) radialement vers l'intérieur,
les deuxièmes rainures borgnes (72) étant prévues de préférence dans les segments de garniture de friction situés radialement à l'extérieur (20) associés aux points d'inflexion situés à l'intérieur (44), particulièrement préférablement dans tous les segments de garniture de friction situés radialement à l'extérieur (20) associés aux points d'inflexion situés à l'intérieur (44).

12. Pièce de friction (2) selon l'une quelconque des revendications 4 à 11, **caractérisée en ce que** les premières et/ou deuxièmes rainures borgnes (70, 72) sont rétrécies radialement vers l'intérieur,
les bords des premières et/ou deuxièmes rainures borgnes (70, 72) formant de préférence un angle compris entre 20° et 25°, particulièrement préférablement un angle compris entre 22° et 23°.

13. Pièce de friction (2) selon l'une quelconque des revendications précédentes, **caractérisée en ce que** les points d'inflexion situés à l'intérieur (44) sont disposés sur un cercle intérieur (50) de premier rayon (r₃) et les points d'inflexion situés à l'extérieur (42) sont disposés sur un cercle extérieur (52) de deuxième rayon (r₄), lesquels sont concentriques l'un à l'autre, le premier rayon (r₃) étant inférieur au deuxième rayon (r₄),
les points d'embouchure (58) étant disposés de préférence sur un cercle intermédiaire, particulièrement préférablement sur un cercle moyen (60) de troisième rayon (r₅), qui est disposé de manière concentrique aux cercles intérieur et extérieur (50, 52), le troisième rayon (r₅) étant supérieur au premier rayon (r₃) et inférieur au deuxième rayon (r₄).

14. Pièce de friction (2) selon la revendication 13, **caractérisée en ce que** le bord intérieur (32) de la surface de friction (30) s'étend le long d'un cercle périphérique interne (36) de premier rayon de cercle périphérique (r₁) et le bord extérieur (34) de la surface de friction (30) s'étend le long d'un cercle périphérique extérieur (38) de deuxième rayon de cercle périphérique (r₂), les cercles périphériques (36, 38) étant disposés de manière concentrique l'un à l'autre, de préférence aussi de manière concentrique aux cercles intérieur et extérieur (50, 52),
la différence entre le premier rayon (r₃) et le premier rayon de cercle périphérique (r₁) et/ou la différence entre le deuxième rayon (r₄) et le deuxième rayon de cercle périphérique (r₂) valant de préférence au moins 3 mm, particulièrement préférablement plus de 4 mm,
le rapport entre la différence entre le premier et le deuxième rayon de cercle périphérique (r₁, r₂) et la différence entre le premier et le deuxième rayon (r₃, r₄) étant de préférence supérieure à 3 sur 2, particulièrement préférablement supérieure à 3 sur 1.

15. Pièce de friction (2) selon l'une quelconque des revendications précédentes, **caractérisée en ce que** les troisièmes rainures (56) se terminent aux points d'embouchure (58), les deuxièmes rainures (54) se terminant de préférence aux points d'inflexion situés à l'extérieur (42) et les quatrièmes rainures (62) se terminant de préférence aux points d'inflexion situés à l'intérieur (44), et/ou **en ce que** le motif de rainures dans la surface de friction (30) est formé à raison de plus de 80%, de préférence de plus de 90%, particulièrement préférablement à 100%, par la première rainure périphérique (40), les deuxièmes rainures périphériques (54), et les troisièmes rainures périphériques (56), ainsi qu'éventuellement par les quatrièmes rainures (62), les premières rainures borgnes (70) et/ou les deuxièmes rainures borgnes (72).
